# EUROPÄISCHE PATENTSCHRIFT

(11) **EP 3 286 552 B1**
(45) Veröffentlichungstag und Bekanntmachung des Hinweises auf die Patenterteilung: **20.01.2021**
(21) Anmeldenummer: 16705063.2
(22) Anmeldetag: 08.02.2016
(51) Int. Cl.: G01N 21/88, G01N 21/90

(54) **BEHÄLTERINSPEKTIONSVORRICHTUNG UND BEHÄLTERINSPEKTIONSVERFAHREN ZUR INSPEKTION VON BEHÄLTERN**
CONTAINER INSPECTION DEVICE AND CONTAINER INSPECTION METHOD FOR INSPECTING CONTAINERS
DISPOSITIF D'INSPECTION DE RÉCIPIENTS ET PROCÉDÉ D'INSPECTION DE RÉCIPIENTS POUR L'INSPECTION DE RÉCIPIENTS

(30) Priorität: 20.04.2015 DE 102015106013
(43) Veröffentlichungstag der Anmeldung: 28.02.2018
(73) Patentinhaber: Krones AG, 93073 Neutraubling (DE)
(72) Erfinder: WILL, Christof, 93073 Neutraubling (DE); NIEDERMEIER, Anton, 93073 Neutraubling (DE); AICHINGER, Karl, 93073 Neutraubling (DE); KLINGER, Reinhard, 93073 Neutraubling (DE); PIANA, Stefan, 93073 Neutraubling (DE)
(74) Vertreter: Schuhbießer, Irmgard Gertrud
(86) Internationale Anmeldenummer: PCT/EP2016/052635
(87) Internationale Veröffentlichungsnummer: WO 2016/169667

(56) Entgegenhaltungen:
- DE-A1-102013 106 894
- DE-C1- 10 017 126
- US-A- 4 668 983
- US-A1- 2001 028 227
- US-A1- 2005 174 473
- US-A1- 2009 033 761
- US-A1- 2012 176 735
- US-A1- 2013 083 330
- Perry West: "High speed, real-time machine vision", US Automated Vision Systems Inc., Cybertronics, 6. April 2003 (2003-04-06), XP002756523, US Gefunden im Internet: URL:http://www.imagenation.com/pdf/highspe ed.pdf [gefunden am 2016-04-14]

## Beschreibung

Die vorliegende Erfindung bezieht sich auf eine Behälterinspektionsvorrichtung und ein Behälterinspektionsverfahren zur Inspektion von Behältern oder deren logische zugeordnete Sekundär-Verpackungseinheiten wie Getränkekisten und Gebinde oder Paletten. Die Behälterinspektionsvorrichtung und das Behälterinspektionsverfahren können beispielsweise in einer Behälterbehandlungsanlage zum Einsatz kommen, in welcher die Behälter mit der Behälterinspektionsvorrichtung auf Fehler, Defekte, usw. inspiziert werden.

Perry West "High speed, real-time machine vision", Automated Vision Systems Inc., Cybertronics, US, (20030406), US, URL: http://www.imagenation.com/pdf/highspeed.pdf, (20160414), XP002756523 [Y] 1-9 zeigt eine Behälterinspektionsvorrichtung und Behälterinspektionsverfahren (vgl. Deckblatt), bei denen Behälter in Echtzeit inspiziert werden. Triggen eines Blitzes mit Software wird aufgrund der großen Unsicherheit der Softwarelatenzen als sehr schwierig bezeichnet, so dass dafür Hardware favorisiert ist.

DE 100 17 126 C1 zeigt ein Verfahren und eine Vorrichtung zum optischen Überprüfen transparenter Behälter. Die Vorrichtung zum Durchführen des Verfahrens weist einen LED-Leuchtschirm mit einer Vielzahl einzeln oder gruppenweise aktivierbarer LEDs auf. Der LED-Leuchtschirm ist neben einem Strom aus in einer Reihe hintereinander angeordneten transparenten Behältern, einem Behälterstrom, angeordnet. Werden die Behälter mit dem LED-Leuchtschirm beleuchtet, kann ein Bild des Behälters aufgenommen werden, um die optische Überprüfung der Behälter durchzuführen

US 2001/0028227 A1 beschreibt ein LED-Beleuchtungssystem welches über ein Kabel mit Energie versorgt wird und welches ebenfalls über das Kabel mit einem Datenbussystem zur Echtzeitsteuerung verbunden ist. Verschiedenste Anwendungsmöglichkeiten werden erwähnt, unter anderem auch die Anwendung in Inspektionsvorrichtungen.

US 2009/0033761 A1 beschreibt eine Smart-Kamera mit integriertem Beleuchtungs-Kontroller und einem Businterface zum Routen von Trigger-Signalen zwischen Smart-Kamera und anderen Geräten, wie beispielsweise dem Beleuchtungskontroller.

US 2013/008330 A1 beschreibt eine Behälterbehandlungsanlage mit einer Triggereinrichtung welche durch eine Lichtschranke mit einem Beleuchtungsgitter und mit Lichtempfängern angesteuert wird. Es wird unter anderem ein Echtzeitbussystem eingesetzt zur Weiterleitung von Triggersignalen zu einer Fertigungseinheit, zu einer Transporteinheit, zu einer Inspektionseinheit und/oder zu einer Abfülleinheit.

Eine Inspektionsvorrichtung umfasst somit eine Beleuchtung, eine optische Aufnahmeeinheit und eine Bildauswerteeinheit. Die Aufnahmeeinheit und Bildauswerteeinheit kann im gleichen Gerät realisiert sein, wie z. B. in sogenannten Vision-Sensoren oder intelligenten Kameras, aber auch getrennt umgesetzt sein, wie z. B. einer Kamera und einer separaten Bildauswerteeinheit.

Für die Beleuchtung der Inspektionsvorrichtung kommen in der Inspektionstechnik im Allgemeinen verschiedene Arten von technischen Leuchten zum Einsatz. Die Beleuchtung kann als Dauerlicht oder geschaltetes Licht oder geblitztes Licht ausgeführt sein. Bei einer Beleuchtung mit Dauerlicht wird hier eine Leuchtzeit T_{EIN} von ca. 1 Sekunde bis ∞ verstanden. Bei einer Beleuchtung mit geschaltetem Licht beträgt die Leuchtzeit T_{EIN} ca. 150 µs bis ca. 2 s. Bei einer Beleuchtung mit geblitztem Licht beträgt die Leuchtzeit T_{EIN} ca. 1µs bis 400 µs. Die Übergänge sind fließend. In der übrigen Zeit, also der Nicht-Leuchtzeit, ist die Beleuchtung ausgeschaltet. Diese Nicht-Leuchtzeit ist nachfolgend auch als Ausschaltzeit T_{AUS} bezeichnet.

Die Inspektion von Behältern, insbesondere die von Behältern in Behälterbehandlungsanlagen der Getränkeabfüllung während der Bewegung, wird bevorzugt mit geblitzten Beleuchtungen ausgeführt. Dies ist gleichzeitig die aufwändigste Beleuchtung. Lässt die Inspektionsaufgabe es zu, könnte auch eine geschaltete Beleuchtung oder ein Dauerlicht eingesetzt werden. Geblitzte oder geschaltete Beleuchtungen können einen eigenen Energiespeicher besitzen, um für die Dauer der Leuchtzeit T_{EIN} eine ausreichend große Energiemenge bereitzustellen. Nachfolgend wird nur von Blitzbeleuchtungen gesprochen, jedoch gelten die Erläuterungen auch in gleicher Weise für geschaltete Beleuchtungen.

Das Auslösen einer Beleuchtung erfolgt durch ein Trigger-Signal, welches in der Beleuchtung eine vordefinierte Blitzdauer auslöst, oder durch die Signallänge gesteuert wird.

Demzufolge benötigt eine Beleuchtung mindestens folgende Anschlüsse: eine Energieversorgung, eine geblitzte oder geschaltete Beleuchtung, und zusätzlich ein Trigger-Signal oder Einschaltsignal (T_{EIN}-Signal) zum Auslösen der geblitzten oder geschalteten Beleuchtung.

Bei der Auswerteeinheit wird für die Aufnahmeeinheit, die als 1D-, 2D- oder 3D-Kamera ausgeführt sein kann, in der Regel eine Blende (Shutter) eingesetzt, welche für eine vorbestimmte Blendenzeit T_{S} (Shutter-Zeit) geöffnet ist und einen Aufnahmesensor freigibt. Nur die zeitliche Schnittmenge aus Blendenzeit T_{S} und Leuchtzeit T_{EIN} wirkt effektiv auf den Aufnahmesensor und erzeugt ein Bild mit der effektiven Belichtungszeit T_{B}. Die Intensität des daraus resultierenden Bildes ist das Integral aus Lichtintensität im Aufnahmesensor über die effektive Belichtungszeit T_{B}. Bilder der gleichen Intensität können nur erreicht werden, wenn die Intensität der Beleuchtung und die effektive Belichtungszeit T_{B} konstant sind.

In der technischen Umsetzung wird entweder die Leuchtzeit T_{EIN} so gesetzt, dass die Blendenzeit T_{S} immer innerhalb der Leuchtzeit T_{EIN} liegt, oder umgekehrt. Jedoch sollte die Leuchtzeit T_{EIN} nicht beliebig verlängert werden, denn dann gehen die Vorteile der eigentlich zu wählenden Leuchtzeit T_{EIN} verloren. Im umgekehrten Fall soll auch die Blendenzeit T_{S} nicht beliebig verlängert werden, denn damit wird der Aufnahmesensor für Fremdlicht, wie z.B. Umgebungslicht oder Lichtblitze, aus anderen Inspektionseinheiten empfänglich und kann die nachfolgende Auswertung irritieren.

Um die genannten Nachteile zu vermeiden, muss die Beleuchtung mit der Aufnahmeeinheit synchronisiert werden. Im Stand der Technik wird die Synchronisierung durch eine gemeinsame Trigger-Leitung erreicht, oder die Aufnahmeeinheit steuert die Beleuchtung über einen digitalen Ausgang. Ebenfalls möglich ist, dass die Beleuchtung die Aufnahmeeinheit steuert.

Eine Synchronisation einer Uhr der Aufnahmeeinheit und einer Uhr der Beleuchtung kann beispielsweise über ein Computernetzwerk erfolgen, auf dem ein etabliertes Zeitprotokoll, wie SNTP oder NTP läuft. Jedoch kann ein Computernetzwerk nicht garantieren, dass ein Kommunikationspaket innerhalb einer vordefinierten Zeit die Aufnahmeeinheit und die Beleuchtung als Teilnehmer der Synchronisation erreicht. Die vordefinierte Zeit leitet sich beispielsweise aus dem Bildfeld der Aufnahmeeinheit sowie der Reaktionszeit zur Aufnahme nach der Erfassung des Behälters ab. Je kleiner das Bildfeld ist, desto kürzer muss die Strecke zwischen der Erfassung des Behälters und dem Ort der Aufnahme sein. Die Zeit für einen Transport des Behälters über die Strecke ergibt sich aus der Transportgeschwindigkeit der Behälterbehandlungsanlage, die z. B. in einer Streckblasmaschine bis zu 8 m/s beträgt. Für die Reaktionszeit ist ein Drehgebersignal relevant. Mit dem Drehgebersignal wird in etwa alle 100µs bis 10ms, typischerweise alle 0,2 - 5ms, geprüft, ob der Behälter die Strecke zwischen der Erfassung des Behälters und dem Ort der Aufnahme tatsächlich zurückgelegt hat. Das Behältererfassungssignal und das Drehgebersignal sind Stimuli für die Entscheidung, wann eine Aufnahme mit der Aufnahmeeinheit ausgelöst werden soll. Wegen der sich aus den genannten Bedingungen für eine Behälterbehandlungsanlage ergebenden kurzen Reaktionszeit und damit vordefinierten Zeit scheidet das Computernetzwerk für das rechtzeitige, synchrone Auslösen von Belichtungszeit und Blitzzeit und damit für die benötigte Synchronisation aus.

Ein weiterer Nachteil von bisherigen Lösungen bei einer Behälterinspektionsvorrichtung für eine Behälterbehandlungsanlage liegt in der aufwändigen Verkabelung. Bei einer Behälterbehandlungsanlage muss die Beleuchtung oft umkonfiguriert werden, da die Lampenfarbe dem Behältermaterial angepasst werden muss, Leuchtsegmente der Behältergeometrie angepasst sein müssen, usw.. In diesen Fällen sind an die Beleuchtung ein Versorgungskabel mit Trigger-Signal und weitere Leitungen anzuschließen.

In Bezug auf die Trigger-Leitung ist auch problematisch, dass eine ungünstig verlegte Leitung Störungen einkoppeln und unkontrolliert eine Blitzbeleuchtung auslösen kann. Fälschlich, unkontrolliert ausgelöste Trigger entziehen dem Energiespeicher der Beleuchtung ungewollt Energie. Ist der Energiespeicher nicht ausreichend geladen, kann ein notwendiger Blitz nicht mit der vollen Helligkeit durchgeführt werden. Als Resultat schwankt die Helligkeit im aufgenommenen Bild, im schlimmsten Fall ist das Bild zu dunkel. Dadurch steigt der Aufwand der Verkabelung, da beispielsweise leistungsführende (Motor-) Leitungen getrennt von der Trigger-Leitung zu verlegen sind.

Ein weiteres Problem besteht darin, dass bei der Behälterinspektionsvorrichtung eine Vielzahl von schnellen Ausgängen erforderlich ist. In einem übergeordneten System müssen nicht nur die Stimuli eingelesen, sondern auch Ausgänge bereitgestellt werden. Dadurch steigen die Kosten der Behälterinspektionsvorrichtung.

Ein weiterer Nachteil besteht darin, dass die Verkabelungstopologie vorab bekannt sein muss. Etwaige Änderungen oder Ergänzungen bedürfen einer Schaltplanänderung. Beispiel: Aufnahmeeinheit A und B, benutzen die gleiche Beleuchtung. Die Aufnahmeeinheiten A, B agieren unabhängig voneinander. Die Ausgänge beider Aufnahmeeinheiten A, B steuern die Beleuchtung. Zur Entkopplung werden Dioden benutzt. Soll je nach verarbeitetem Produkt zwischen Durchlicht-Beleuchtung C und Auflicht-Beleuchtung D gewechselt werden, ist die Synchronisation zwischen den Kameras und den Beleuchtungen sehr aufwändig. Eine Lösung können zusätzliche UND-Gatter im Beleuchtungspfad sein. Die Triggermöglichkeiten müssen jedoch auch hierbei in der Verkabelungstopologie a priori bekannt sein.

Daher ist es Aufgabe der vorliegenden Erfindung, eine Behälterinspektionsvorrichtung und ein Behälterinspektionsverfahren zur Inspektion von Behältern bereitzustellen, mit welchen die zuvor genannten Probleme gelöst werden können. Insbesondere sollen eine Behälterinspektionsvorrichtung und ein Behälterinspektionsverfahren zur Inspektion von Behältern bereitgestellt werden, welche realisieren können, dass eine Inspektion der Behälter zuverlässig die geforderten Qualitätsanforderungen erfüllt, insbesondere zur Synchronisation der Beleuchtung, und dennoch einfach und kostengünstig realisierbar ist.

Diese Aufgabe wird durch eine Behälterinspektionsvorrichtung zur Inspektion von Behältern in einer Behälterbehandlungsanlage nach Patentanspruch 1 gelöst. Die Behälterinspektionsvorrichtung umfasst mindestens eine Leuchte zum Beleuchten von Behältern zu einem vorbestimmten Inspektionszeitpunkt zum Inspizieren der Behälter, und eine elektrische Leitung zum Anschluss der mindestens einen Leuchte an eine elektrische Energieversorgung und an ein Bussystem, so dass die elektrische Leitung sowohl zum Versorgen der mindestens einen Leuchte mit elektrischer Energie als auch zur Verbindung mit einem Echtzeit-Datennetzwerk dient, wie in Anspruch 1 beschrieben.

Mit der Behälterinspektionsvorrichtung können die Anforderungen an die Echtzeitfähigkeit für eine Inspektion der Behälter kostengünstig und effektiv erfüllt werden.

Ein weiterer Vorteil besteht darin, dass die Komplexität einer Verkabelung zwischen den einzelnen Komponenten der Behälterinspektionsvorrichtung bzw. der Behälterbehandlungsanlage und im Schaltschrank der Behälterinspektionsvorrichtung stark reduziert ist, wenn die Verkabelung nur noch über eine einzige Leitung bzw. Steckverbindung bewerkstelligt ist. Die Behälterinspektionsvorrichtung hat eine Ein-Leitung-Lösung für deren Leuchten und Peripheriegeräte. Insgesamt sind deutlich weniger elektrische Leitungen in und für die Behälterinspektionsvorrichtung zu verlegen. Daraus ergibt sich auch eine Platzersparnis im Schaltschrank.

Somit wird mit dem Bussystem eine Busverbindung von Blitzbeleuchtungen mittels Ein-Leitung-Lösung beschrieben, so dass nur eine Leitung an die Beleuchtung bzw. die Leuchten zu führen ist. Über die Leitung werden die Energieversorgung, die Echtzeitdaten, wie z. B. Trigger, und gegebenenfalls die Parametrierung der Beleuchtung realisiert. Somit muss keine separate Trigger-Leitung an die Leuchten herangeführt werden. Ein weiterer Vorteil besteht darin, dass bei der Ein-Leitung-Lösung die Art der Echtzeitdatenübertragung, d. h. das Trigger-Signal, äußerst unempfindlich gegenüber elektromagnetischer Einstrahlung ist. Dadurch wird die Verkabelung der Leuchten bzw. Blitzbeleuchtungen stark vereinfacht bei gleichzeitiger Verbesserung der Trigger-Zuverlässigkeit.

Daraus ergibt sich auch der Vorteil einer einfachen Erweiterbarkeit des Gesamtsystems um einzelne Komponenten, da hierfür keine Hardware-Erweiterung des Zentralsystems notwendig ist, sondern lediglich ein weiterer Busteilnehmer in die kombinierte Bus- und Versorgungsleitung eingeschleift wird. Vorteilhaft ist hier auch, dass mehrere Leuchten oder Lampen oder auch andere entsprechend ausgestattete Geräte einfach in einer Kette (,Daisy Chain') verschaltbar sind.

Ein großer Vorteil liegt auch darin, dass die Verdrahtungstopologie unabhängig von der Trigger-Topologie ist. Dies erhöht die Flexibilität des Gesamtsystems.

Darüber hinaus ist ein Vorteil, dass keine Steuerausgänge an der Aufnahmeeinheit oder an einer übergeordneten Stelle für die Trigger der Beleuchtung notwendig sind.

Vorteilhaft ist außerdem, dass Synchronisationsmechanismen zwischen mehreren Leuchten oder Lampen einfach als Softwarefunktion ausgeführt werden können und keine Querverkabelung benötigt wird. Somit kann z.B. die Unterdrückung bzw. Verzögerung des Blitzes einer zweiten Beleuchtung oder eines anderen, benachbarten Inspektionssystems realisiert werden, während eine erste Beleuchtung aktiv ist. Dadurch können z.B. störende Lichtreflexe oder Streulicht vermieden werden.

Noch ein Vorteil ergibt sich dadurch, dass unabhängige Topologie standardisiert werden kann und weder bei Planung, Fertigung oder Inbetriebnahme einer Kommission Fehler in der Ausführung auftreten können. Der Wegfall von Fehlerfällen reduziert den Aufwand und das System kann damit kostengünstig ausgeführt werden.

Vorteilhafte weitere Ausgestaltungen der Behälterinspektionsvorrichtung sind in den abhängigen Patentansprüchen angegeben.

Das Bussystem ist zudem zum Zuführen eines Triggersignals zu der mindestens einen Leuchte ausgestaltet, um das Beleuchten von Behältern zu dem vorbestimmten Inspektionszeitpunkt zum Inspizieren der Behälter zu triggern. Dadurch ist die Verkabelung der Behälterinspektionsvorrichtung deutlich weniger aufwändig sowie platzsparender und kostengünstiger gestaltet.

Hierbei kann das Triggersignal zum Triggern der mindestens einen Leuchte durch Überabtasten des Bussystems im einstelligen Mikrosekundenbereich ausgestaltet sein.

Es ist denkbar, dass die elektrische Leitung ein Datenkabel ist, von welchem mindestens ein Aderpaar zum Anschluss an die elektrische Energieversorgung und mindestens ein Aderpaar zum Anschluss an das Bussystem vorgesehen ist.,

Möglicherweise ist die mindestens eine Leuchte eine LED-Blitzleuchte, welche einen Energiezwischenspeicher zur Zwischenspeicherung der von der elektrischen Energieversorgung zugeführten elektrischen Energie aufweist, und wobei der Energiezwischenspeicher derart ausgestaltet ist, dass die LED-Blitzleuchte aus dem Energiezwischenspeicher kurzzeitig eine Energiemenge entnehmen kann, die höher ist als die von der elektrischen Energieversorgung in der Zeit der Entnahme bereitgestellte Energie. Der Zwischenspeicher kann beispielsweise als Kondensator oder Akku ausgeführt sein.

Hierbei kann der Energiezwischenspeicher derart ausgestaltet sein, dass mindestens zwei Leuchten zumindest zeitweise gleichzeitig im vorbestimmten Inspektionstakt zum Beleuchten eines Behälters blitzen können, und/oder die Behälterinspektionsvorrichtung kann zum Steuern der LED-Blitzleuchte derart ausgestaltet sein, dass für denselben Behälter in einem Behälterstrom einer Behälterbehandlungsanlage nacheinander unterschiedliche Bereiche der LED-Blitzleuchte zur Inspektion eines Behälters angeschaltet werden.

Hierbei kann die Farbe und/oder Helligkeit der mindestens einen Leuchte, insbesondere während einer Beleuchtung eines Behälters, steuerbar sein.

Die zuvor beschriebene Behälterinspektionsvorrichtung kann Teil einer Behälterbehandlungsanlage zur Behandlung von Behältern sein, wie in Anspruch 8 definiert.

Die Aufgabe wird zudem, wie in Anspruch 10 definiert, durch ein Behälterinspektionsverfahren zur Inspektion von Behältern mit einer zuvor beschriebenen Behälterinspektionsvorrichtung gelöst. Das Behälterinspektionsverfahren umfasst die Schritte: Versorgen, mit einer elektrischen Leitung, mindestens einer Leuchte von einer elektrischen Energieversorgung mit elektrischer Energie, Übertragen von Daten, mit der elektrischen Leitung, über ein Bussystem, so dass die elektrische Leitung die mindestens eine Leuchte sowohl mit elektrischer Energie versorgt als auch an ein Echtzeit-Datennetzwerk anschließt, und Beleuchten von Behältern zu einem vorbestimmten Inspektionszeitpunkt zum Inspizieren der Behälter mit der mindestens einen Leuchte oder in einem vorbestimmten Inspektionstakt zum Triggern über die eine echtzeitfähige Busleitung.

Das Behälterinspektionsverfahren erzielt die gleichen Vorteile, wie sie zuvor in Bezug auf die Behälterinspektionsvorrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein Blockschaltbild zur Veranschaulichung einer Maschine mit einer Behälterinspektionsvorrichtung gemäß einem ersten Ausführungsbeispiel;
Fig. 2 ein Blockschaltbild zur Veranschaulichung der elektrischen Verschaltung der Behälterinspektionsvorrichtung gemäß dem ersten Ausführungsbeispiel; und
Fig. 3 eine schematische Ansicht eines Datenrahmens, der in dem Bussystem der Behälterinspektionsvorrichtung gemäß dem ersten Ausführungsbeispiel übertragen wird.

In den Figuren sind gleiche oder funktionsgleiche Elemente, sofern nichts anderes angegeben ist, mit denselben Bezugszeichen versehen.

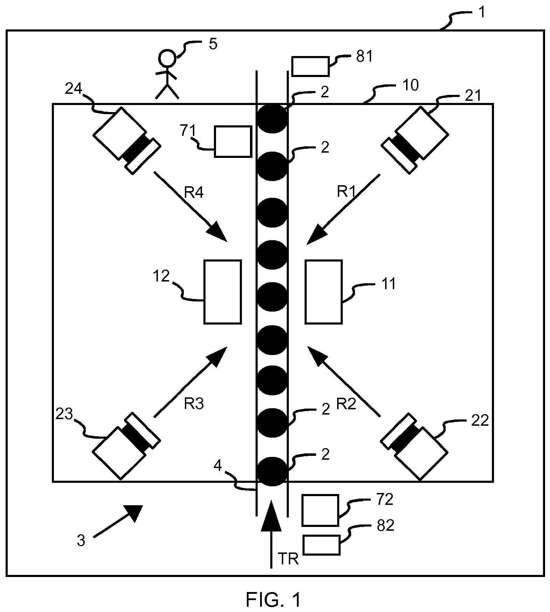

Fig. 1 zeigt sehr schematisch einen Teil einer Maschine 1, die beispielsweise eine Behälterbehandlungsanlage, insbesondere eine Leerflascheninspektionsmaschine, Vollflascheninspektionsmaschine, Etikettenkontrolleinrichtung, Deckelinspektionsmaschine, Prefominspektionsmaschine, Füllhöhenkontrollmaschine, Streckblasmaschine, Füllmaschine, Maschine zur Behandlung von Glasbehältern, usw., eine Verpackungsanlage, eine Kasteninspektionseinrichtung , usw. sein kann. Auch wenn die Maschine 1 nachfolgend teilweise am Beispiel einer Behälterbehandlungsanlage beschrieben ist, ist die Maschine 1 nicht darauf beschränkt.

In der Maschine 1 werden Behälter 2, insbesondere transparente Kunststoffflaschen, Glasflaschen, Metalldosen, Preformen, leer, voll, verschlossen, unverschlossen, etikettiert, nicht etikettiert usw., produziert und/oder behandelt. Dabei ist gemeint, dass die nachfolgend beschriebene Behälterinspektionsvorrichtung jedem Behandlungsschritt in der Behälterbehandlungsanlage vor- und/oder nachgeschaltet sein kann. In der Maschine 1 können auch den Behältern 2 logisch zugeordnete Sekundär-Verpackungseinheiten, wie Getränkekisten und Gebinde oder Paletten, inspiziert werden.

In Fig. 1 sind der Einfachheit halber nicht alle Behälter 2 mit einem Bezugszeichen versehen. Die Behälter 2 werden in einem Behälterstrom 3, in welchem die Behälter 2 jeweils einzeln in einer Reihe nacheinander angeordnet sind, mit Hilfe einer Transporteinrichtung 4 durch eine Behälterinspektionsvorrichtung 10 in Richtung eines Pfeils TR bewegt. Dabei werden die Behälter 2 an Leuchten 11, 12 und Aufnahmeeinheiten 21, 22, 23, 24 vorbeibewegt. Die Maschine 1 wird von einer Person 5 beispielsweise bedient oder auch nur betrachtet. Lichtschranken 71, 72 und/oder Drehgeber 81, 82 können Zustände der Behälter 2 an der Transporteinrichtung 4 oder nur eine Bewegung, insbesondere Drehung, der Transporteinrichtung 4 ohne Behälter 2 erfassen. Die Lichtschranken 71, 72 und/oder Drehgeber 81, 82 können zum Erfassen des Wegs der Behälter 2 und damit zum Ermitteln der Geschwindigkeit des Behälterstroms 3 zum Einsatz kommen. Die Lichtschranken 71, 72 und/oder Drehgeber 81, 82 sind beispielsweise dezentral angeordnet, insbesondere am Einlauf und/oder Auslauf der Behälter 2 in/aus der Behälterinspektionsvorrichtung 10.

Bei der Behälterinspektionsvorrichtung 10 von Fig. 1 ist die Leuchte 11 zwischen den Aufnahmeeinheiten 21, 22 auf der einen Seite des Behälterstroms 3 angeordnet. Die Leuchte 12 ist zwischen den Aufnahmeeinheiten 23, 24 auf der anderen Seite des Behälterstroms 3 angeordnet. So können die Behälter 2 von zwei verschiedenen Seiten beleuchtet werden. Die Aufnahmeeinheiten 23, 24 sind dabei so positioniert, dass sie von jedem der Behälter 2 Bilder aus beispielsweise den vier Richtungen R1, R2, R4, R5 aufnehmen können, die in Fig. 1 durch einen Pfeil dargestellt sind. Bei Bedarf können die Aufnahmeeinheiten 21, 22, 23, 24 auch anders positioniert werden, so dass beispielsweise Bilder von schräg oben über der Leuchte 11 oder schräg unten unter der Leuchte 12, und/oder Bilder auf verschiedenen Höhen der Behälter 2 aufgenommen werden, usw.

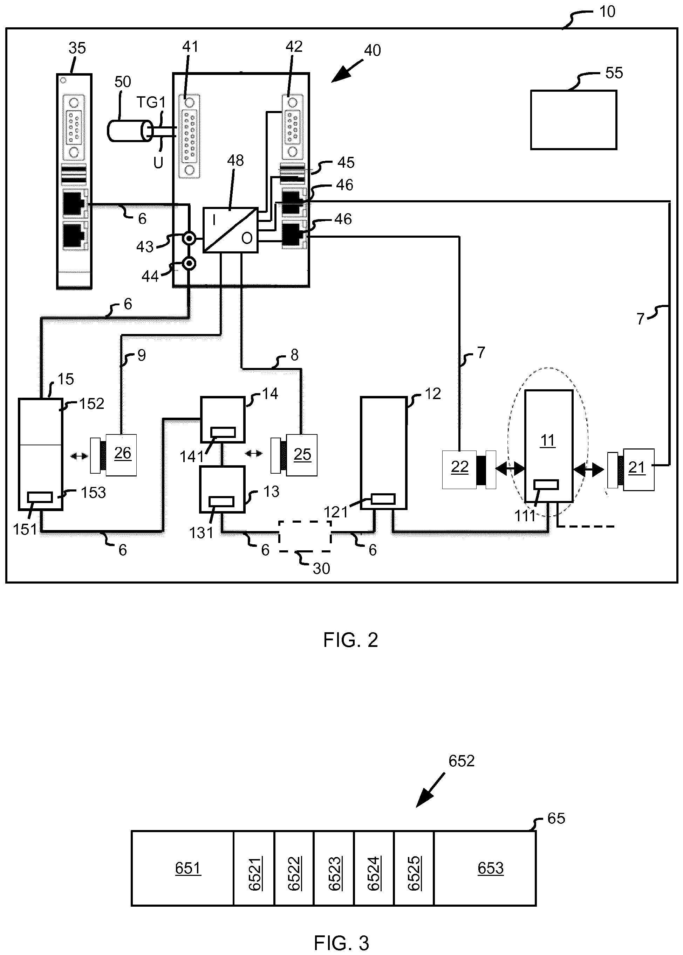

Eine oder beide Leuchten 11, 12 leuchten die Behälter 2 aufgrund einer in Fig. 2 näher veranschaulichten Ansteuerung des Erfassungssystems so aus, dass eine oder mehrere der Aufnahmeeinheiten 21 bis 24 die Behälter 2 optisch erfassen kann/können. Die Aufnahmeeinheiten 21 bis 24 können beispielsweise Bilder aufnehmen, die zum Erkennen von Fehlern, Defekten, usw. der Behälter 2 ausgewertet werden. Die Aufnahmeeinheiten 21 bis 24 können Kameras sein.

Die Wahl der Art der Leuchten 11, 12 ist von verschiedenen Rahmenbedingungen, wie beispielsweise vom Preis, Energieverbrauch (=Wärmeentwicklung) und der gegenseitigen Beeinflussung von weiteren Inspektionsvorrichtungen abhängig. Bei der Wahl der Leuchtmittel (Lampe) kommen alle Arten von elektrischen Leuchtmitteln zum Einsatz. Außer LED-Lampen können auch Glüh-, Halogen-, Leuchtstoff-, Hochdruck-Entladungs-und Niederdruck-Entladungslampen Verwendung finden. Die Wellenlänge der Leuchtmittel deckt den Bereich von Strahlung mit einer Frequenz im Tera-Hertz-Bereich bis in der Bereich der Wellenlänge von Röntgenstrahlen ab.

Fig. 2 zeigt eine spezielle Ausgestaltung der Behälterinspektionsvorrichtung 10 genauer. In der Maschine 1 ist ein Bussystem 6 vorgesehen, an welches viele der Komponenten der Maschine 1 angeschlossen sind. Zudem sind Anschlussleitungen 7, 8, 9 vorgesehen.

In dem Bussystem 6 können Daten über eine elektrische Leitung echtzeitfähig, beispielsweise mit dem Profinet-Standard (Profinet = Process Field Network) oder dem Ethernet POWERLINK-Standard, oder gemäß dem EtherCAT-Standard (Ethernet for Control Automation Technology) gemäß der IEC 61158, usw., übertragen werden. Das Bussystem 6 ist insbesondere ein Ethernet Echtzeit Feldbus Das Bussystem 6 stellt ein Echtzeit-Datennetzwerk bereit.

Über die Punkt zu Punkt Verbindungen (Point-to-Point: im eigentlichen Sinne - also der Verbindungsweg gänzlich ohne Zwischenstation) 7, 8 oder 9 können als Aufnahmeeinheiten 21 bis 26 Industriekameras an vorhandene Datennetzwerke,, durch die Nutzung des Gigabit-Ethernet-Standards angeschlossen werden. In Fig. 2 sind die Aufnahmeeinheiten 23, 24 nicht gezeigt. Die Anschlussleitung 7 kann insbesondere für den GigEVision® Standard realisiert sein. Die Anschlussleitung 8 kann eine Aufnahmeeinheit 25 über einen USB-Schnittstelle an ein Bildaufnahmesystem 40 anschließen Ebenso wäre mit der Anschlussleitung 9 ein Anschluss über alternative Vision Protokolle wie z.B. FireWire oder CoaXPress möglich.

In Fig. 2 hat die Behälterinspektionsvorrichtung 10 die erste Leuchte 11 mit einem Energiezwischenspeicher 111, eine zweite Leuchte 12 mit einem Energiezwischenspeicher 121, eine dritte Leuchte 13 mit einem Energiezwischenspeicher 131, eine vierte Leuchte 14 mit einem Energiezwischenspeicher 141, eine fünfte Leuchte 15 mit einem Energiezwischenspeicher 151 und einem ersten und zweiten Leuchtfeld 152, 153, die erste und zweite Aufnahmeeinheit 21, 22, eine fünfte Aufnahmeeinheit 25 und eine sechste Aufnahmeeinheit 26, wobei die Aufnahmeeinheiten 21, 22, 25, 26 ein Erfassungssystem bilden und/oder jeweils ganz allgemein als optische Erfassungseinrichtung ausgeführt sein können, eine optionalen Power-Injektor bzw. elektrische Energieversorgung 30, einen Bussystem-Controller 35, ein Bildaufnahmesystem 40 mit einem Anschlussmodul 41 und an das eine elektrische Leitung 50 angeschlossen ist, und eine allgemeine Benutzerschnittstelle 55. Auch die Signale der Lichtschranken 71, 72 und/oder Drehgeber 81, 82 können an den Bussystem-Controller 35 weitergeben werden, auch wenn dies in Fig. 2 nicht dargestellt ist.

Die Leuchte 15 kann auch mehr als zwei Leuchtfelder 152, 153 aufweisen, die separat voneinander ansteuerbar sind und damit separat voneinander leuchten können. Bei der zweiten Leuchte 14 kann ein Leuchten in Bezug auf den Farb- und/oder Helligkeitsverlauf gesteuert werden.

Die Energiezwischenspeicher 111, 121, 131, 141, 151 sind derart ausgestaltet, dass die zugeordnete Leuchte 11 bis 15 bzw. Blitzleuchte aus dem jeweiligen Energiezwischenspeicher 111, 121, 131, 141, 151 kurzzeitig eine Energiemenge entnehmen kann, die höher ist als die von der elektrischen Energieversorgung in der Zeit der Entnahme bereitgestellte Energie. Mit dem Energiezwischenspeicher 111 oder den anderen Energiezwischenspeichern der Leuchten 12 bis 15 kann mindestens eine Leuchte 11 bis 14 und/oder eine Leuchte 15 mit mindestens zwei getrennten Leuchtfeldern 152, 153 zumindest zeitweise gleichzeitig und/oder kurz nacheinander und/oder mit unterschiedlicher Dauer und/oder unterschiedlichem elektrischem Strom zum Blitzen mit Energie versorgt werden.

Damit bilden die Leuchten 11 bis 15 ein Blitzgerät, das für sehr kurze Zeit oder impulsartig sehr viel Licht zur Verfügung stellt. Der Lichtimpuls dauert nicht sehr lange, bei voller Leistung meistens nur wenige tausendstel Sekunden, wie zuvor in der Beschreibungseinleitung beschrieben.

Der optionale Power-Injektor bzw. die elektrische Energieversorgung 30 kann anstelle der in dem Anschlussmodul 41 vorgesehenen Energieversorgungseinheit zur Versorgung mit einer Spannung U die Stromversorgung der Leuchten 11 bis 15 übernehmen oder ergänzen und an beliebiger Stelle im Echtzeit-Bussystem 6 eingeschleift sein. Sind sehr viele Leuchten 11 bis 15 oder sonstige Verbraucher an die Leitung für das Echtzeit-Bussystem 6 angeschlossen, kann die Einspeisung zur elektrischen Energieversorgung an mehreren Stellen erfolgen.

In Fig. 2 hat das vereinfacht dargestellte Bildaufnahmesystem 40 ein Anschlussmodul 41. Das Anschlussmodul 41 dient zum Anschluss der elektrischen Leitung 50, über welche eine elektrische Energieversorgung mit der Spannung U und das Triggersignal TG1 auf verschiedenen Adern oder Aderpaaren geführt werden. Das Bildaufnahmesystem 40 hat zudem Anschlüsse 43, 44 zum Anschluss sowohl des Bussystem-Controllers 35 als auch der Leitung des Bussystems 6, beispielsweise jeweils über einen Datenanschlussstecker, wie einen RJ-45-Stecker. Außerdem zeigt das Bildaufnahmesystem 40 mit seinen Anschlüssen 42, 45und 46 diverse Anschlussmöglichkeiten für unterschiedlichste Kameraschnittstellen, wie USB Vision Kamera Link, CoaXPress, GigEVision oder weitere, mit Hilfe der Anschlussleitungen 7, 8 und 9.. Das Echtzeitbussystem 6 und die Anschlussleitungen 7, 8 , 9 sind über ein I/O-Modul bzw. Ein-/Ausgabemodul 48 klar voneinander getrennt.

Die allgemeine Benutzerschnittstelle 55 kann als Personalcomputer (PC) ausgeführt sein und kann auch als GUI-PC bezeichnet werden. Mit der allgemeinen Benutzerschnittstelle 55 kann die Person 5 die Behälterinspektionsvorrichtung 10 bedienen und überwachen. Bei dem Bildaufnahmesystem 40 von Fig. 2 wird zum Triggern der Beleuchtung mit mindestens einer der Leuchten 11 bis 15 ein Echtzeitbus, z. B. EtherCat, in Verbindung mit der elektrischen Versorgung der Beleuchtung in einem Kabel des Bussystems 6 eingesetzt. Sollte die Beleuchtung zusätzlich konfiguriert werden müssen, kann dies mit dem gleichen Echtzeitbus erfolgen.

Die elektrische Leitung für das Bussystem 6 führt somit sowohl die Energieversorgung für eine Beleuchtung mit den Leuchten 11 bis 15, als auch die Kommunikation des Echtzeitbusses an die Leuchten 11 bis 15. Die elektrische Leitung für das Bussystem 6 besteht aus mindestens zwei oder mehr Adern oder Aderpaaren. Die elektrische Energieversorgung kann dabei die gleichen Adern wie die Kommunikation benutzen, oder einen Teil dieser Adern. Sie kann auch über separate Adern in der Leitung geführt sein. Die elektrische Leitung für das Bussystem 6 kann als Datenkabel ausgeführt sein, von welchem mindestens ein Aderpaar zum Anschluss an die elektrische Energieversorgung und mindestens ein Aderpaar zum Anschluss an das Bussystem vorgesehen ist.

Die Leuchten 11 bis 15 erhalten die elektrische Leitung für das Bussystem 6 als eine Anschlussleitung oder- kabel, wobei weitere Leitungen oder Kabel nicht notwendig sind. Die Leuchten 11 bis 15 können jedoch jeweils einen weiteren Anschluss haben. Dieser verbindet über eine zweite Leitung für das Bussystem 6 eine weitere Leuchte der Leuchten 11 bis 15, usw., so dass eine Art Kette entsteht.

Das Echtzeitbussystem 6 ist nicht ausschließlich den Leuchten 11 bis 15 vorbehalten. Am Echtzeitbussystem 6 können z. B. Messeinrichtungen als Teilnehmer enthalten sein, die die Stimuli für die Inspektion von Behältern 2 liefern. Dazu gehören unterschiedliche Sensoren, wie z. B. die Lichtschranken 71, 72, IR-Sensoren, HF-Laugensensoren, die Drehgeber 81, 82, Abstandssensoren, Metallsensoren, Farbsensoren usw. Die Sensoren können über eine eigene Schnittstelle direkt mit dem Echtzeitbussystem 6 verbunden sein, oder über ein Ein-/Ausgabegerät mit dem Echtzeitbussystem 6 verbunden sein. Möglich ist, dass auch diese Sensoren oder Ein-/Ausgabegeräte mit Hilfe der in der Leitung des Echtzeitbussystems 6 befindlichen Energieversorgung gespeist werden.

Erfindungsgemäß ist mindestens eine Aufnahmeeinheit 21, 22, 25, 26 des Bildaufnahmesystems 40 mit einer Echtzeitschnittstelle am gleichen Echtzeitbussystem 6 angeschlossen. Jedoch ist eine klare Trennung des Echtzeitbussystems 6 zu der Anschlussleitung 7 vorhanden, wie in Fig. 2 über das Ein-/Ausgabemodul 48 gezeigt und bereits zuvor erwähnt. Ein Bildaufnahmesystem 40 kann eine Aufnahmeeinheit 21, 22, 25, 26 oder mehrere unabhängige Aufnahmeeinheiten 21, 22, 25, 26 unterstützen. Die Schnittstelle zwischen Aufnahmeeinheit 21, 22, 25, 26 und Bildaufnahmesystem 40 kann unterschiedlich ausgebildet sein. Typische Schnittstellen zwischen Bildaufnahmesystem 40 und Aufnahmeeinheiten 21, 22, 25, 26 können ein offener Standard sein, wie GigE Vision, USB, Camera Link, oder weitere, aber auch eine proprietäre Schnittstelle. Das Bildaufnahmesystem 40 könnte eine intelligente Kamera mit Echtzeitbus-Schnittstelle sein. Jedoch ist aufgrund der zuvor und nachfolgend beschriebenen Konfiguration innerhalb des Bildaufnahmesystems 40 streng darauf geachtet, dass das Bussystem 6 und das Netz im Zusammenhang mit der Anschlussleitung 7 getrennt voneinander sind, also nicht gleich oder dasselbe sind.

Das Echtzeitbussystem 6 stellt sicher, dass in endlicher Zeit und kurzer Reaktionszeit oder Verzögerungszeit T_{D} Daten versendet und empfangen werden. Das Echtzeitbussystem 6 bietet die Fähigkeit, dass mehrere oder alle an das Echtzeitbussystem 6 angeschlossenen Teilnehmer zeitsynchron arbeiten, ähnlich einem Computernetz. Die Daten werden in einem sogenannten Rahmen oder Nachricht versendet.

Bei dem Echtzeitbussystem 6 ist sichergestellt, dass der Rahmen zyklisch unter allen Teilnehmern, wie Leuchten 11 bis 15, Sensoren, usw., ausgetauscht wird. Die Zykluszeit zum Senden eines Rahmens in dem Echtzeitbussystem 6 kann von weniger als einer Millisekunde bis hin zu mehren Millisekunden betragen. Typisch für die Inspektionstechnik sind 0.5 - 10ms, ideal sind 1 - 2ms. Das Echtzeitbussystem 6 kann die Teilnehmer bis hin zu wenigen Nanosekunden synchronisieren. In der praktischen Umsetzung können damit Geräte, wie die Teilnehmer des Echtzeitbussystems 6, insbesondere die Leuchten 11 bis 15 und die Aufnahmeeinheiten 21, 22, 25, 26, zeitlich zueinander synchrone Aktionen im einstelligen µs-Bereich ausführen. Damit kann über das Echtzeitbussystem 6 innerhalb einer sehr kurzen Reaktionszeit zwischen Stimuli und der abgeleiteten Aktion die Aktion verteilt auf mehrere Geräte, wie die Teilnehmer des Echtzeitbussystems 6, insbesondere die Leuchten 11 bis 15 und die Aufnahmeeinheiten 21, 22, 25, 26, äußerst synchron durchgeführt werden. Eine Aktion im Sinne der vorliegenden Beschreibung ist die synchrone Ausführung der Belichtung mit der jeweiligen Aufnahmeeinheit 21, 22, 25, 26 und des Lampenblitzes der Leuchten 11 bis 15.

Die Geräte zueinander sind 1000 Mal genauer synchron als die Zykluszeit, da eine Synchronität in Bezug auf die Geräte im µs-Bereich anstelle vom ms besteht. Nun ist zwischen der Reaktionszeit, zwischen Stimuli und Aktion und der Synchronität, der Ausführungszeitpunkt in mindestens zwei unterschiedlichen Geräten zu unterscheiden. Die Reaktionszeit ist die Zeit, die im Gesamtsystem verstreicht, bis aus Eingangsstimuli mindestens eine Aktion das ausführende Gerät erreicht. Das bei der Behälterinspektionsvorrichtung 10 eingesetzte Echtzeitbussystem 6 bietet beides.

Das Bussystem 6 der Behälterinspektionsvorrichtung 10 ist so ausgestaltet, dass ein Triggersignal TG1, TG2 beliebige Leuchten der Leuchten 11 bis 15 oder beliebige Leuchtfelder der Leuchtfelder 152, 153 der Leuchte 11 bzw. beliebige Kombinationen der Aufnahmeeinheiten 21 bis 26 und Blitz- bzw. Belichtungszeitkombinationen auslösen kann. Denkbar ist beispielsweise die Kombination, die Aufnahmeeinheit 25 zu triggern und gleichzeitig, während einer Belichtungszeit von 100µs der Aufnahmeeinheit 25 die Leuchte 12, die insbesondere eine Durchlichtleuchte ist, für eine Zeitdauer von 100µs zu aktivieren und zeitgleich die Leuchte 13, die insbesondere eine Auflichtleuchte ist, für eine Zeitdauer von 50µs blitzen zu lassen.

Alternativ oder zusätzlich ist es möglich, für eine 100µs Aufnahme mit der Aufnahmeeinheit 22 die Leuchte 11 für eine Zeitdauer von 50µs zu aktivieren und dann die Leuchte 12 oder ein nicht dargestelltes Leuchtfeld der Leuchte 12 im Anschluss weitere 50µs zu aktivieren.

Eine weitere Ausgestaltungsmöglichkeit der Behälterinspektionsvorrichtung 10 ist, dass über die µs-genaue Steuerung der Bildaufnahme mit einer der Aufnahmeeinheiten 21 bis 26 die Helligkeit des aufgenommenen Bildes über die Blitzlänge und/ oder Energie einer der Leuchten 11 bis 15 oder eines Leuchtfelds der Leuchtfelder 152, 153 der Leuchte 15 erzielt werden kann.

Eine weitere Ausgestaltungsmöglichkeit liegt darin, dass verschiedene Leuchtfelder 152, 153 der Leuchte 15 zu unterschiedlichen Zeitpunkten während einer Aufnahme mit der Aufnahmeeinheit 26 ausgelöst werden. Dies ist beispielsweise erforderlich, wenn gezielt Muster und/ oder Kontrastkanten eines Behälters 2 oder seines Etiketts oder Verschlusses usw. generiert werden müssen.

Eine weitere Ausgestaltungsmöglichkeit ist das gezielte Anschalten unterschiedlicher Farbspektren mittels beispielsweise der Leuchte 12, wobei hier das Anschalten des Rot-Grün-Blau-Spektrums (RGB-Spektrums) mittels Lichtemissionsdiode (LED) genannt werden kann wie ebenso nahes IR- Spektrum und/oder das UV-Spektrum. Es versteht sich in diesem Zusammenhang von selbst, dass dabei alle Mischfarben generiert werden können, insbesondere auch zur Laufzeit des Blitzvorganges.

Das Bussystem 6 ist derart ausgestaltet, dass eine Änderung der Bustopologie, das heißt ein Hinzufügen oder Entfernen eines Busteilnehmers im Betrieb der Behälterinspektionsvorrichtung 10 möglich ist ("hot-plug"). Noch dazu ist die Behälterinspektionsvorrichtung 10 modular erweiterbar. Diese Eigenschaften sind besonders vorteilhaft, da dadurch ein Stillstand der Behälterbehandlungsanlage als Maschine 1 beispielsweise bei Sortenwechseln so kurz wie möglich wird.

Die Behälterinspektionsvorrichtung 10 hat mit dem zuvor beschriebenen Aufbau sowohl mechanisch als auch thermisch als auch in Bezug auf die einzuhaltenden EMV-Schutzmaßnahmen einen sehr robusten Aufbau.

Fig. 3 zeigt einen Rahmen 65 für eine Übertragung von Daten bei dem Bussystem 6 der Behälterinspektionsvorrichtung 10 gemäß einem zweiten Ausführungsbeispiel. Die Behälterinspektionsvorrichtung 10 und die zugehörige Maschine 1 sind in weiten Teilen auf die gleiche Weise ausgeführt, wie in Bezug auf das erste Ausführungsbeispiel beschrieben.

Daher werden nachfolgend nur die Unterschiede zum ersten Ausführungsbeispiel beschrieben.

Der Rahmen 65 in Fig. 3 hat einen Rahmenkopf 651, ein Datenteil 652 und ein Rahmenende 652. Der Datenteil hat Datenblöcke 6521 bis 6525.

Wie zuvor erwähnt, sendet das Echtzeitbussystem 6 zyklisch, nach Ablauf der Zykluszeit, den Rahmen 65 an alle Teilnehmer. Ist die Reaktionszeit, Zykluszeit ausreichend, im Sinne zwischen kürzestem Zeitpunkt zwischen Stimuli und Aktion, aber die Granularität der Zykluszeit in der Anwendung noch nicht ausreichend, kann ein Datenblock 6521 bis 6525 im Datenteil 652 für einen bestimmten Teilnehmer als Überabtastung interpretiert werden. Dies wird anhand des folgenden Beispiels erläutert.

Beispielsweise soll ein Trigger TG1 in 1,6ms ausgelöst werden. Die Zykluszeit beträgt 1ms. Im einfachen Fall kann der Trigger TG1 in einer Millisekunde oder nach zwei Millisekunden ausgelöst werden. Werden nun im Datenteil 652 für einen Trigger 5 Werte verwendet, kann ein Überabtasten (oversampling) durchgeführt werden. D. h. jeder Wert steht für einen Ausführungszeitpunkt im 0,2ms Raster. Im Beispiel würde im Datenteil 652 in den Datenblöcken 6521 bis 6525 die Information [0,0,0,1,0] die Überabtastung des Trigger-Zeitpunktes bedeuten. Damit ist es möglich, einen Trigger in 1,6ms mit einer zeitlichen Auflösung von 200µs ausführen zu können, obwohl der Zyklus des Bussystems 6 im Beispiel 1ms beträgt. Auch wenn dieses Beispiel eine fünffache Überabtastung beschreibt, könnte im Datenteil 652 die Überabtastung verringert oder vergrößert werden.

Die Überabtastung muss im Echtzeitbussystem 6 für alle Teilnehmer nicht gleich sein. Es könnten Teilnehmer mit größerer Überabtastung, andere mit keiner, noch andere mit geringerer Überabtastung im gleichen Echtzeitbus betrieben werden.

Gemäß einer Modifikation des zweiten Ausführungsbeispiels wird die Überabtastung, anstelle von der zuvor beschriebenen binären Digitalisierung, als Zahl interpretiert. Hiermit könnte beispielsweise mit 8 binären Stellen eine Granularität von 256 Stufen erreicht werden. Im Beispiel würde die Granularität dann ca. 3,9 µs betragen.

Ob die Überabtastung als "Zeitscheibe" (zweites Ausführungsbeispiel) oder Wert (Modifikation des zweiten Ausführungsbeispiels) interpretiert wird, ist nur eine Frage der Notwendigkeit. Beides ist möglich. Beides hat Vorzüge. So kann bei gleicher Speicherbelegung die Granularität gesteigert werden oder es können mit einer der Leuchten 11 bis 15 kurz hintereinander mehrere Blitze ausgelöst werden.

Beispielsweise sind im Datenteil 652 fünf Stellen als [0,0,0,0,0] reserviert, wobei die Zykluszeit 1ms beträgt. Damit kann z. B. eine Granularität von 2⁵ = 32 Unterteilungen mit einer Auflösung von 1ms / 32 = 31,25µs erreicht werden. Alternativ kann auch jede der 5 Stellen als eine Zeitscheibe von 200µs interpretiert werden. Je nach Inspektionsaufgabe sind beide Interpretationen im gleichen Echtzeitbussystem 6 möglich. Der Inhalt [0,0,1,0,1] kann bedeuten: 1) Auslösen eines Blitzes in (2⁴*0+2³*0+2²*1+2¹*0+2⁰*1)*31, 25µs = 5*32,25µs = 156,25µs, wenn der Dateninhalt als Binärzahl interpretiert wird. 2) Auslösen von zwei Blitzen zu den Zeitpunkten 400µs und 800µs. Somit kann entweder hoch granular ein Blitz ausgelöst werden. Oder es werden im Abstand von 400µs Blitze in der gleichen Beleuchtung ausgelöst. Diese könnten mit zwei Aufnahmeeinheiten 21, 22 synchronisiert werden. Die Aufnahmeeinheit 21 "empfängt" die Information [0,0,1,0,0] im Datenteil 652 und nimmt daher zum Zeitpunkt 400µs eine Aufnahme mit der Beleuchtung der Leuchte 11 auf. Die Aufnahmeeinheit 22 "empfängt" die Information [0,0,0,0,1] im Datenteil 652 und nimmt mit der gleichen Beleuchtung zum Zeitpunkt 800µs eine Aufnahme auf. Praktisch werden die Informationen in dem Bildaufnahmesystem 40 aufgetrennt und in die richtigen Anschlussleitungen 7 für die Aufnahmeeinheiten 21, 22 eingespeist.

Ansonsten ist die Behälterinspektionsvorrichtung 10 gemäß dem vorliegenden Ausführungsbeispiel auf die gleiche Weise ausgeführt, wie bei dem ersten Ausführungsbeispiel beschrieben.

Alle zuvor beschriebenen Ausgestaltungen der Behälterinspektionsvorrichtung 10 und des Behälterinspektionsverfahrens können einzeln oder in allen möglichen Kombinationen Verwendung finden. Insbesondere können die Merkmale des ersten bis dritten Ausführungsbeispiels beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Behälterinspektionsvorrichtung 10 kann auch nur eine Leuchte, beispielsweise die erste Leuchte 11, oder zwei Leuchten aufweisen. Alternativ kann die Behälterinspektionsvorrichtung 10 auch mehr als die gezeigten fünf Leuchten aufweisen. Zudem kann die Behälterinspektionsvorrichtung 10 auch nur eine Aufnahmeeinheit, beispielsweise die erste Aufnahmeeinheit 21 aufweisen. Alternativ kann die Behälterinspektionsvorrichtung 10 auch mehr als sechs Aufnahmeeinheiten aufweisen.

Zusätzlich oder alternativ ist es auch möglich, dass für aufeinanderfolgende Behälter 2 in einem Behälterstrom 3 einer Behälterbehandlungsanlage nacheinander unterschiedliche Bereiche der Leuchten 11 bis 15 in Form einer LED-Blitzleuchte zur Inspektion eines Behälters 2 angeschaltet werden.

Bei jedem der Ausführungsbeispiele kann zumindest eine der Leuchten 11 bis 15 auch derart angesteuert werden, dass die Leistung P für einen Blitz der Leuchte 11 bis 15 kontinuierlich über der Zeit ansteigt. Darüber hinaus kann eine andere Leuchte der Leuchten 11 bis 15 auch derart angesteuert werden, dass die Leistung der Leuchte 11 bis 15 kontinuierlich über der Zeit t sinkt. Hierbei sind auch andere Varianten denkbar.

Bei jedem der Ausführungsbeispiele können die Leuchten 11 bis 15 bei der Beleuchtung des Behälterstroms 3 mit der maximalen Leistung der Leuchte 11 bis 15 angesteuert werden, wenn eine oder mehrere der Aufnahmeeinheiten 21 bis 26 eine optische Erfassung oder Bildaufnahme durchführen soll(en).

### Bezugszeichenliste

- 1: Maschine
- 2: Behälter
- 3: Behälterstrom
- 5: Person
- 6: Bussystem
- 7, 8, 9: Anschlussleitung
- 10: Behälterinspektionsvorrichtung
- 11 bis 15: Leuchte
- 21 bis 26: Kamera
- 30: Elektrische Energieversorgung
- 35: Bussystem-Controller
- 40: Bildaufnahmesystem
- 41: Anschlussmodul mit Energieversorgungseinheit
- 43,44: Anschluss Bussystem
- 42,45,46: Anschluss für Bildaufnahmesystem 40
- 48: Ein-/Ausgabemodul
- 50: Leitung
- 55: Allgemeine Benutzerschnittstelle
- 65: Rahmen
- 71, 72: Lichtschranken
- 81,82: Drehgeber
- 111: Energiezwischenspeicher
- 121: Energiezwischenspeicher
- 131: Energiezwischenspeicher
- 141: Energiezwischenspeicher
- 151: Energiezwischenspeicher
- 152: Erstes Leuchtfeld
- 153: Zweites Leuchtfeld
- 230, 240: Diode
- 651: Rahmenkopf
- 652: Datenteil
- 653: Rahmenende
- 6521 bis 6525: Datenblock
- I: Lichtintensität
- R1, R2, R3, R4: Aufnahmerichtung
- U: elektrische Versorgungsspannung
- TG1, TG2: Triggersignal
- T_{AUS}: Ausschaltzeit
- T_{D}: Verzögerungszeit
- T_{EIN}: Leuchtzeit
- TR: Pfeil für Transportrichtung
- t: Zeit

## Patentansprüche

1. Behälterinspektionsvorrichtung (10) zur Inspektion von Behältern (2) in einer Behälterbehandlungsanlage, mit
mindestens einer Leuchte (11 bis 15) zum Beleuchten von mit einer Transporteinrichtung (4) durch die Behälterinspektionsvorrichtung (10) bewegten Behältern (2) zu einem vorbestimmten Inspektionszeitpunkt zum Inspizieren der Behälter (2),
mindestens einer Aufnahmeeinheit (21 bis 24) zur Aufnahme von mindestens einem Bild der Behälter (2), und
einer elektrischen Leitung zum Anschluss der mindestens einen Leuchte (11 bis 15) an eine elektrische Energieversorgung (30) und an ein Bussystem (6), so dass die elektrische Leitung sowohl zum Versorgen der mindestens einen Leuchte (11 bis 15) mit elektrischer Energie als auch zur Verbindung mit einem Echtzeit-Datennetzwerk dient,
wobei die Behälterinspektionsvorrichtung (10) ausgestaltet ist, die sich bewegenden Behälter (2) mit der mindestens einen Leuchte (11 bis 15) so auszuleuchten, dass die mindestens eine Aufnahmeeinheit (21 bis 24) einen der bewegten Behälter (2) optisch erfassen kann, wenn die Behälter (2) jeweils einzeln in einer Reihe nacheinander in einem Behälterstrom (3) angeordnet sind, und
wobei das Bussystem (6) zum Triggern der Beleuchtung der Behälter (2) mit der mindestens einen Leuchte (11 bis 15) und zum Triggern der mindestens einen Aufnahmeeinheit (21 bis 24) zur Aufnahme von mindestens einem Bild der Behälter (2) ausgestattet ist.

2. Behälterinspektionsvorrichtung (10) nach Anspruch 1, wobei das Bussystem (6) ausgestaltet ist, ein Triggersignal zu verwenden, das zum Triggern der mindestens einen Leuchte (11 bis 15) durch Überabtasten des Bussystems (6) im einstelligen Mikrosekundenbereich ausgestaltet ist.

3. Behälterinspektionsvorrichtung (10) nach einem der vorangehenden Ansprüche,
wobei die elektrische Leitung ein Datenkabel ist, von welchem mindestens ein Aderpaar zum Anschluss an die elektrische Energieversorgung (30) und mindestens ein Aderpaar zum Anschluss an das Bussystem (6) vorgesehen ist.

4. Behälterinspektionsvorrichtung (10) nach einem der vorangehenden Ansprüche,
wobei die mindestens eine Leuchte (11 bis 15) eine LED-Blitzleuchte ist, welche einen Energiezwischenspeicher (111, 121, 131, 141, 151) zur Zwischenspeicherung der von der elektrischen Energieversorgung zugeführten elektrischen Energie aufweist, und
wobei der Energiezwischenspeicher (111, 121, 131, 141, 151) derart ausgestaltet ist, dass die LED-Blitzleuchte aus dem Energiezwischenspeicher (111, 121, 131, 141, 151) kurzzeitig eine Energiemenge entnehmen kann, die höher ist als die von der elektrischen Energieversorgung in der Zeit der Entnahme bereitgestellte Energie.

5. Behälterinspektionsvorrichtung (10) nach Anspruch 4,
wobei der Energiezwischenspeicher (111, 121, 131, 141, 151) derart ausgestaltet ist, dass mindestens zwei Leuchten (11 bis 15) zumindest zeitweise gleichzeitig im vorbestimmten Inspektionstakt zum Beleuchten eines Behälters (2) blitzen können.

6. Behälterinspektionsvorrichtung (10) nach Anspruch 4 oder 5, wobei die Behälterinspektionsvorrichtung (10) zum Steuern der LED-Blitzleuchte derart ausgestaltet ist, dass für denselben Behälter (2) in einem Behälterstrom (3) einer Behälterbehandlungsanlage nacheinander unterschiedliche Bereiche der LED-Blitzleuchte zur Inspektion eines Behälters (2) angeschaltet werden.

7. Behälterinspektionsvorrichtung (10) nach einem der vorangehenden Ansprüche, wobei die Farbe und/oder Helligkeit der mindestens einen Leuchte (11 bis 15), insbesondere während einer Beleuchtung eines Behälters (2), steuerbar ist.

8. Behälterbehandlungsanlage zur Behandlung von Behältern (2), mit
mindestens einer Behälterbehandlungsmaschine, die eine Streckblasmaschine oder eine Füllmaschine oder eine Maschine zur Behandlung von Glasbehältern oder eine Verpackungsanlage oder eine Kasteninspektionseinrichtung ist, oder zum Etikettieren oder Verschließen von Behältern (2) ausgestaltet ist, und
mindestens einer Behälterinspektionsvorrichtung (10) nach einem der vorangehenden Ansprüche,
wobei jedem Behandlungsschritt in der Behälterbehandlungsanlage eine Behälterinspektionsvorrichtung (10) vor- und/oder nachgeschaltet sein kann.

9. Behälterbehandlungsanlage nach Anspruch 8, wobei die Behälterinspektionsvorrichtung (10) eine Leerflascheninspektionsmaschine oder eine Vollflascheninspektionsmaschine oder eine Etikettenkontrolleinrichtung oder eine Deckelinspektionsmaschine oder eine Prefominspektionsmaschine oder eine Füllhöhenkontrollmaschine ist.

10. Behälterinspektionsverfahren zur Inspektion von Behältern (2) mit einer Behälterbehandlungsanlage, die mindestens eine Leuchte (11 bis 15), mindestens eine Aufnahmeeinheit (21 bis 24) und eine elektrische Leitung aufweist, mit den Schritten
Versorgen, mit der elektrischen Leitung, der mindestens einen Leuchte (11 bis 15) von einer elektrischen Energieversorgung mit elektrischer Energie,
Übertragen von Daten, mit der elektrischen Leitung, über ein Bussystem (6), so dass die elektrische Leitung die mindestens eine Leuchte (11 bis 15) sowohl mit elektrischer Energie versorgt als auch an ein Echtzeit-Datennetzwerk anschließt, und
Beleuchten, mit der mindestens einen Leuchte (11 bis 15), und Aufnehmen, mit der mindestens eine Aufnahmeeinheit (21 bis 24), von mit einer Transporteinrichtung (4) durch die Behälterinspektionsvorrichtung (10) bewegten Behältern (2) zu einem vorbestimmten Inspektionszeitpunkt zum Inspizieren der Behälter (2),
wobei die sich bewegenden Behälter (2) mit der mindestens einen Leuchte (11 bis 15) so ausgeleuchtet werden, dass die mindestens eine Aufnahmeeinheit (21 bis 24) einen der bewegten Behälter (2) optisch erfassen kann, wenn die Behälter (2) jeweils einzeln in einer Reihe nacheinander in einem Behälterstrom (3) angeordnet sind, und
wobei das Bussystem (6) die Beleuchtung der Behälter (2) mit der mindestens einen Leuchte (11 bis 15) triggert und die mindestens eine Aufnahmeeinheit (21 bis 24) zur Aufnahme von mindestens einem Bild der Behälter (2) triggert.

## Claims

1. A container inspection device (10) for inspecting containers (2) in a container treatment plant, comprising
at least one light fixture (11 to 15) for illuminating containers (2) at a predetermined inspection instant of time for inspecting the containers (2), the containers (2) being moved by a transport device (4) through the container inspection device (10),
at least one recording unit (21 to 24) for recording at least one image of the containers (2), and
an electrical line for connecting the at least one light fixture (11 to 15) to an electrical energy supply (30) and to a bus system (6), so that the electrical line serves both to supply the at least one light fixture (11 to 15) with electrical energy and to connect with a real time data network,
wherein the container inspection device (10) is configured to illuminate the moving containers (2) with the at least one light fixture (11 to 15) such that the at least one recording unit (21 to 24) is able to optically detect one of the moving containers (2), when the containers (2) are positioned individually and one after the other in a row in a container stream (3), and
wherein the bus system (6) is configured to trigger the illumination of the containers with the at least one light fixture (11 to 15) and to trigger the at least one recording unit (21 to 24) for recording at least one image of the containers (2).

2. The container inspection device (10) according to claim 1, wherein the bus system is configured to use a trigger signal that is configured for triggering the at least one light fixture (11 to 15) by oversampling the bus system (6) in the one-digit microsecond range.

3. The container inspection device (10) according to any one of the preceding claims, wherein the electrical line is a data cable from which at least one lead pair is provided for connecting to the electrical energy supply (30) and at least one lead pair is provided for connecting to the bus system (6).

4. The container inspection device (10) according to any one of the preceding claims,
wherein the at least one light fixture (11 to 15) is a LED-flash light fixture which comprises an energy buffer (111, 121, 131, 141, 151) for intermediate storage of the electrical energy supplied by the electrical energy supply, and
wherein the energy buffer (111, 121, 131, 141, 151) is configured such that the LED flash lamp can consume for a short time from the energy buffer (111, 121, 131, 141, 151) an energy amount which is higher than the energy provided by the electrical energy supply in the time of the consumption.

5. The container inspection device (10) according to claim 4,
wherein the energy buffer (111, 121, 131, 141, 151) is configured such that at least two light fixtures (11 to 15) can flash simultaneously at least for a predetermined time in the predetermined inspection clock for illuminating a container (2).

6. The container inspection device (10) according to claim 4 or 5,
wherein the container inspection device (10) is configured for controlling the LED-flash lamp such that for the same container (2) in a container stream (3) of a container treatment plant are switched on, one after the other, different areas of the LED-flash light for inspecting a container (2).

7. The container inspection device (10) according to any one of the preceding claims, wherein the color and/or brightness of the at least one light fixture (11 to 15) is controllable, in particular during an illumination of a container (2).

8. A container treatment plant for treating of containers (2), comprising
at least one container treatment machine which is a blow molding machine or a filling machine or a machine for handling glass containers or a packaging plant or a box inspection device, or is configured to label or close containers (2), and
at least one container inspection device (10) according to the preceding claims, wherein to each handling step in the container treatment plant a container inspection device (10) may be an upstream or downstream device.

9. A container treatment plant according to claim 8, wherein the container inspection device (10) is an inspection machine for empty bottles or an inspection machine for full bottles or a label control device or a cap inspection machine or a filling height control machine.

10. A container inspection method for inspecting containers (2) with a container treatment plant, which comprises at least one light fixture (11 to 15), at least one recording unit (21 to 24), and an electrical line, the method comprising the steps of:
supplying, by the electrical line, the at least one light fixture (11 to 15) with electrical energy from an electrical energy supply,
transmitting data, with the electrical line, via a bus system (6), such that the electrical line both supplies the at least one light fixture (11 to 15) with electrical energy and connects the at least one light fixture (11 to 15) to a real time data network, and
illuminating, with the at least one light fixture (11 to 15), and recording, with the at least one recording unit (21 to 24), of containers (2) at a predetermined inspection instant of time, the containers (2) being moved by a transport device (4) through the container inspection device (10),
wherein the moving containers (2) are illuminated with the at least one light fixture (11 to 15) such that the at least one recording unit (21 to 24) is able to optically detect one of the moving containers (2), when the containers (2) are positioned individually and one after the other in a row in a container stream (3), and
wherein the bus system (6) triggers the illumination of the containers (2) with the at least one light fixture (11 to 15) and triggers the at least one recording unit (21 to 24) for recording at least one image of the containers (2).

## Revendications

1. Dispositif d'inspection de récipients (10) destiné à inspecter des récipients (2) dans une installation de traitement de récipients, comprenant
au moins un luminaire (11 à 15) destiné à éclairer des récipients (2) à un moment d'inspection prédéterminé pour inspecter les récipients (2), les récipients (2) étant déplacés par un dispositif de transport (4) à travers le dispositif d'inspection de récipients (10),
au moins une unité d'enregistrement (21 à 24) destinée à enregistrer au moins une image des récipients (2), et
une ligne électrique destinée à connecter le au moins un luminaire (11 à 15) à une alimentation en énergie électrique (30) et à un système de bus (6), de sorte que la ligne électrique sert à la fois à alimenter le au moins un luminaire (11 à 15) en énergie électrique et à le connecter à un réseau de données en temps réel,
dans lequel le dispositif d'inspection de récipients (10) est configuré pour éclairer les récipients (2) en mouvement avec le au moins un luminaire (11 à 15) de telle sorte que la au moins une unité d'enregistrement (21 à 24) est apte à détecter optiquement un des récipients (2) en mouvement, lorsque les récipients (2) sont positionnés individuellement et l'un après l'autre de manière consécutive dans un flux de récipients (3), et
dans lequel le système de bus (6) est configuré pour déclencher l'éclairage des récipients avec le au moins un luminaire (11 à 15) et pour déclencher la au moins une unité d'enregistrement (21 à 24) destinée à enregistrer au moins une image des récipients (2).

2. Dispositif d'inspection de récipients (10) selon la revendication 1, dans lequel le système de bus est configuré pour utiliser un signal de déclenchement qui est configuré pour déclencher le au moins un luminaire (11 à 15) par suréchantillonnage du système de bus (6) dans la plage de microseconde à un chiffre.

3. Dispositif d'inspection de récipients (10) selon l'une quelconque des revendications précédentes,
dans lequel la ligne électrique est un câble de données à partir duquel au moins une paire de conducteurs est prévue pour se connecter à l'alimentation en énergie électrique (30) et au moins une paire de conducteurs est prévue pour se connecter au système de bus (6).

4. Dispositif d'inspection de récipients (10) selon l'une quelconque des revendications précédentes,
dans lequel le au moins un luminaire (11 à 15) est un luminaire clignotant à DEL qui comprend un tampon d'énergie (111, 121, 131, 141, 151) destiné au stockage intermédiaire de l'énergie électrique amenée par l'alimentation en énergie électrique, et
dans lequel le tampon d'énergie (111, 121, 131, 141, 151) est configuré de telle sorte que la lampe clignotante à DEL peut consommer pendant une brève période, à partir du tampon d'énergie (111, 121, 131, 141, 151), une quantité d'énergie qui est supérieure à l'énergie fournie par l'alimentation en énergie électrique au moment de la consommation.

5. Dispositif d'inspection de récipients (10) selon la revendication 4,
dans lequel le tampon d'énergie (111, 121, 131, 141, 151) est configuré de telle sorte qu'au moins deux luminaires (11 à 15) peuvent clignoter simultanément au moins pendant un laps de temps prédéterminé dans l'horloge d'inspection prédéterminée pour éclairer un récipient (2).

6. Dispositif d'inspection de récipients (10) selon la revendication 4 ou 5,
dans lequel le dispositif d'inspection de récipients (10) est configuré pour commander la lampe clignotante à DEL de telle sorte que, pour le même récipient (2) dans un flux de récipients (3) d'une installation de traitement de récipients, différentes zones de la lumière clignotante à DEL sont allumées, les unes après les autres, pour l'inspection d'un récipient (2).

7. Dispositif d'inspection de récipients (10) selon l'une quelconque des revendications précédentes, dans lequel la couleur et/ou luminosité du au moins un luminaire (11 à 15) peuvent être commandées, en particulier pendant un éclairage d'un récipient (2).

8. Installation de traitement de récipients pour le traitement de récipients (2), comprenant
au moins une machine de traitement de récipients qui est une machine de moulage par soufflage ou une machine de remplissage ou une machine de manipulation de récipients en verre ou une installation d'emballage ou un dispositif d'inspection de caisson, ou est configurée pour étiqueter ou fermer des récipients (2), et
au moins un dispositif d'inspection de récipients (10) selon les revendications précédentes,
dans laquelle, dans l'installation de traitement de récipients, un dispositif d'inspection de récipients (10) peut être un dispositif en amont ou en aval de chaque étape de manipulation.

9. Installation de traitement de récipients selon la revendication 8, dans laquelle le dispositif d'inspection de récipients (10) est une machine d'inspection pour bouteilles vides ou une machine d'inspection pour bouteilles pleines ou un dispositif de contrôle d'étiquettes ou une machine d'inspection de bouchons ou une machine de contrôle de hauteur de remplissage.

10. Procédé d'inspection de récipients pour l'inspection de récipients (2) avec une installation de traitement de récipients, qui comprend au moins un luminaire (11 à 15), au moins une unité d'enregistrement (21 à 24), et une ligne électrique, le procédé comprenant les étapes :
d'alimentation, par la ligne électrique, du au moins un luminaire (11 à 15) en énergie électrique provenant d'une alimentation en énergie électrique,
de transmission de données, avec la ligne électrique, par le biais d'un système de bus (6), de telle sorte que la ligne électrique alimente à la fois le au moins un luminaire (11 à 15) en énergie électrique et connecte le au moins un luminaire (11 à 15) à un réseau de données en temps réel, et
d'éclairage, avec le au moins un luminaire (11 à 15), et d'enregistrement, avec la au moins une unité d'enregistrement (21 à 24), de récipients (2) à un moment d'inspection prédéterminé, les récipients (2) étant déplacés par un dispositif de transport (4) à travers le dispositif d'inspection de récipients (10),
dans lequel les récipients (2) en mouvement sont éclairés avec le au moins un luminaire (11 à 15) de telle sorte que la au moins une unité d'enregistrement (21 à 24) est apte à détecter optiquement un des récipients (2) en mouvement, lorsque les récipients (2) sont positionnés individuellement et les uns après les autres de manière consécutive dans un flux de récipients (3), et
dans lequel le système de bus (6) déclenche l'éclairage des récipients (2) avec le au moins un luminaire (11 à 15) et déclenche la au moins une unité d'enregistrement (21 à 24) pour l'enregistrement d'au moins une image des récipients (2).
